# EUROPÄISCHE PATENTSCHRIFT

(11) **EP 1 190 180 B1**
(45) Veröffentlichungstag und Bekanntmachung des Hinweises auf die Patenterteilung: **30.03.2005**
(21) Anmeldenummer: 00934832.7
(22) Anmeldetag: 16.06.2000
(51) Int. Cl.: F16B 5/00, F16B 15/00, B29C 65/56

(54) **STOFFSCHLÜSSIGES VERBINDEN**
INTEGRAL JOINING
LIAISON PAR MATIERE

(30) Priorität: 18.06.1999 CH 113799
(43) Veröffentlichungstag der Anmeldung: 27.03.2002
(73) Patentinhaber: Woodwelding AG, 8002 Zürich (CH)
(72) Erfinder: AESCHLIMANN, Marcel, CH-2514 Ligerz (CH); MOCK, Elmar, CH-1955 Salvan (CH); TORRIANI, Laurent, CH-2502 Biel (CH)
(74) Vertreter: Frei, Alexandra Sarah
(86) Internationale Anmeldenummer: PCT/CH2000/000328
(87) Internationale Veröffentlichungsnummer: WO 2000/079137

(56) Entgegenhaltungen:
- EP-A- 0 268 957
- WO-A-96/01377
- WO-A-98/42988
- FR-A- 2 455 502
- PATENT ABSTRACTS OF JAPAN vol. 010, no. 286 (M-521), 27. September 1986 (1986-09-27) -& JP 61 104817 A (KIRIYAMA SHINKENZAI:KK;OTHERS: 01), 23. Mai 1986 (1986-05-23)
- PATENT ABSTRACTS OF JAPAN vol. 004, no. 171 (M-044), 26. November 1980 (1980-11-26) -& JP 55 121024 A (TOYOTA MOTOR CORP), 17. September 1980 (1980-09-17)
- PATENT ABSTRACTS OF JAPAN vol. 017, no. 709 (M-1535), 24. Dezember 1993 (1993-12-24) -& JP 05 245941 A (YOKOHAMA RUBBER CO LTD:THE), 24. September 1993 (1993-09-24)
- PATENT ABSTRACTS OF JAPAN vol. 1996, no. 03, 29. März 1996 (1996-03-29) -& JP 07 300904 A (MAKOTO IKUNO), 14. November 1995 (1995-11-14)

## Beschreibung

Die vorliegende Erfindung betrifft ein Verfahren zum Verbinden von mehreren Körpern mit Verbindungselementen.

Das rationelle Verbinden von Teilen in der industriellen Fertigung stellt eines der Hauptprobleme dar. Speziell poröse Materialien wie Holz, Pressspanplatten, poröse Steine oder andere Materialien sind nur schwer zu verarbeiten. Neben den gängigen Methoden die auf mechanischen Befestigungselementen beruhen sind auch andere Techniken bekannt. Beispielhaft sei hier das Verkleben erwähnt.

Thermische Verfahren, die auf dem Aufschmelzen von gewissen Materialien beruhen, erfreuen sich immer grösserer Beliebtheit. Bei diesen werden die zu verbindenden Oberflächen z.B. unter Reibung gegeneinander gedrückt, sodass entweder einer der Grundstoffe der zu verbindenden Teile, oder ein weiterer Stoff, aufgrund der Reibwärme aufgeschmolzen wird, wodurch die Teile fest miteinander verbunden werden. Die heute bekannten Verfahren weisen verschiedene Nachteile auf. Mechanische Verbindungen, wie Schrauben oder Nägel, die primär auf Form- oder Reibschluss beruhen, sind z.T. aufwendig zu verarbeiten, weisen eine hohe Kerbwirkung auf, reissen leicht aus oder lockern sich im Laufe der Zeit. Speziell erwähnt sei hier die Problematik von ausreissenden oder sich lösenden Befestigungspunkten in Möbeln aus Pressspanplatten oder ähnlichen Materialien. Dies ist auf die zu hohen Spannungs- und die ungünstigen Lastkonzentrationen zurückzuführen.

Das seit alters her bekannte Nageln weist einen signifikanten Vorteil auf: Ein Nagel kann einfach und ohne zusätzliche Vorbereitung in sehr kurzer Zeit verarbeitet werden. Der Nachteil besteht jedoch darin, dass es sich bei einem Nagel um eine Verbindung handelt die nur auf Reibschluss basiert und daher nur relativ gering belastet werden kann. Zudem führen diese Verbindungen, aufgrund der Verdrängung des Grundmaterials, oft zum Spalten der zu verbindenden Teile.

Stoffschlüssige Verbindungen, wie sie beispielsweise durch Kleben entstehen, neigen nicht zum Spalten der zu verbindenden Teile, zeichnen sich jedoch durch andere Nachteile aus. Diese bestehen beispielsweise in den langen Haltezeiten die beim Zusammenfugen der Teile notwendig sind, der geringen Eindringtiefe des Klebstoffes in die zu verbindenden Teile oder den schwer kontrollierbaren Klebstoffmengen (wegfliessen).

Thermische Verfahren, die auf dem Aufschmelzen von Materialien beruhen, weisen hinsichtlich einer rationellen Verarbeitung tendenziell in die richtige Richtung und lassen sich grob in zwei Gruppen aufteilen. Die erste Gruppe besteht darin, dass bspw. die Oberflächen zweier Teile, wovon eines aus einem thermoplastischen Kunststoff besteht, gegeneinander gepresst und parallel (relativ) zueinander bewegt werden, sodass Reibungswärme entsteht. Der dadurch aufgeschmolzene Kunststoff bildet nach dem Erkalten eine materialschlüssige Verbindung zwischen den beiden Teilen. Diese ist jedoch in der Praxis auf die Oberfläche der Teile beschränkt ist. Die Eindringtiefe des aufgeschmolzenen Materials und die Anpressdrücke sind stets gering, wodurch diese Verbindungen nur sehr begrenzt belastbar sind. Eine entsprechende Anwendung ist beispielsweise aus GB 2 061 183 bekannt.

Die zweite Gruppe der thermischen Verfahren beruht darauf, dass bspw. Dübel oder ähnliche Elemente, typischerweise aus schmelzbarem Kunststoff, in vorgängig gefertigte Bohrungen gesteckt werden und anschliessend durch mechanische Anregung und Druck aufgeschmolzen werden. Ein entsprechendes Verfahren ist bspw. aus PCT/EP95/02527 bekannt. Signifikant ist hierbei, dass die zu verbindenden Teile für die Aufnahme der Dübel zwingend vorgebohrt bzw. vorgebahnt werden müssen, bevor der Dübel in die Bohrung eingesetzt und mit den Seitenwänden an vorbestimmten Stellen (gewisse Bereiche am Bohrungsende und entlang des Dübels) durch Aufschmelzen verbunden werden können. Die dazu notwendige thermische Energie wird durch Strahlung oder mittels Ultraschall angeregter Reibung erzeugt. Durch das erforderliche (präzise) Vorbohren, handelt es sich hierbei um ein Verfahren das mehrere Arbeitsschritte erfordert.

WO 9842988 A zeigt ein Verfahren zum Verbinden von zwei Körpern über ein Verbindungselement. Das Verbindungselement wird lose in eine Bohrung eingeführt. Anschliessend wird das Verbindungselement partiell zum Aufschmelzen veranlasst, so dass eine oberflächliche Verbindung resultiert.

Aus EP 0 268 957 ist ein Verfahren zum Verbinden von Folien bekannt. Bei diesem wird ein angespitztes Verbindungselement aus thermoplastischem Kunststoff durch eine Folie oder Platte getrieben, nachdem diese durch Heizen in einen teilplastischen Zustand gebracht sind. Eine Ausführungsform zeigt einen Nagel der durch eine Folie, die sich in einem teilplastischen Zustand befindet, in einen nicht-thermoplastischen Untergrund getrieben wird. Das Verfahren ist nicht geeignet um grössere Teile miteinander zu verbinden.

Es ist Aufgabe der hier diskutierten Erfindung, ein Verfahren aufzuzeigen mittels dem Verbindungen zwischen Körpern rationell hergestellt werden können, wobei schädliche Spannungskonzentrationen vermieden und eine optimale Lasteinleitung selbst in stark porösen Materialien erreicht wird. Die Aufgabe wird durch die in den Patentansprüchen definierte Erfindung gelöst.

Die hier offenbarte Erfindung beruht auf einem Verfahren zur Verbindung von porösen Materialien bzw. zur Verankerung von Lasteinleitungspunkten in porösen und anderen Materialien. Die durch dieses Verfahren erzeugten Verbindungen beruhen auf Stoff- und Formschluss. Verbindungselemente, vorzugsweise aus einem schmelzbaren Kunststoff, werden dabei so auf eine Oberfläche gepresst, dass sie diese durchbrechen und in den darunter liegenden Bereich des Körpers eindringen. Nach Erreichen eines definierten Lastniveaus und/oder nach Erreichen einer bestimmten Eindringtiefe werden die Verbindungselemente unter Aufrechterhaltung der äusseren Last vorzugsweise mittels Ultraschall mechanisch angeregt, so dass sie kontrolliert partiell aufschmelzen. Selbstverständlich kann die mechanische Anregung beispielsweise auch mittels Rotation erzeugt werden. Das Aufschmelzen findet in aller Regel in der Vertiefung statt, die durch das Eindringen des Verbindungselementes durch die Oberfläche ins Grundmaterial entstanden ist. Ähnlich einem Kolben in einem hydraulischen Zylinder, sitzt das nicht aufgeschmolzene Teil des Verbindungselementes in der Öffnung und füllt diese dichtend aus. Da das aufgeschmolzene Material des Verbindungselementes nicht mehr aus der Vertiefung entweichen kann, bildet sich aufgrund der äusseren Last ein hoher hydraulischer Druck. Dieser und die Utraschallschwingungen führen dazu, dass das aufgeschmolzene Material in die bestehenden und/oder neugebildeten Hohlräume des Grundmaterials gepresst wird. Die Eindringtiefe ist dabei abhängig von der Beschaffenheit des Grundmaterials, der Hitze, der Frequenz, der Amplitude, der Auffahrgeschwindigkeit (Vorschub), der von aussen auf das Verbindungselement wirkenden Kraft, der Geometrie sowie des Materials des Verbindungselementes. Durch das aufschmelzbare Volumen des Verbindungselementes kann die Menge des ins Grundmaterial gepressten Materials bestimmt werden. Falls sehr viel Material notwendig sein sollte, oder die Grösse und die Anzahl der im Grundmaterial vorhandenen Hohlräume nicht bekannt sein sollte, ist es möglich Verbindungselemente zu verwenden die kontinuierlich und endlos nachgeführt werden.

Durch das mechanische Einpressen des Verbindungselementes wird zudem erreicht, dass eine Materialkompression des Grundmaterials erreicht wird, die sich vorteilhaft auf die Festigkeit auswirkt. Unter normalen Umständen würden die durch das verdrängte und komprimierte Material entstehenden Spannungsspitzen zum Spalten des Materials führen. Durch die gezielte und aufeinander abgestimmte Applikation von Ultraschall und äusserem mechanischem Druck, sowie die erfindungsgemässe Ausgestaltung der Verbindungselemente, wird aber erreicht, dass die auftretenden Spannungen abgebaut werden und ein Zerstören der zu verbindenden Elemente nicht eintritt. Dennoch entstehende Hohlräume und Spalten werden umgehend durch das aufgeschmolzene Material gefüllt. Die hier offenbarte Erfindung ermöglicht daher erstmals Befestigungselemente in Materialien, insbesondere porösen Materialien wie Holz, Pressspanplatten oder Zellbeton und deren Kombinationen tiefenwirksam und ohne Vorbohren in einem Arbeitsschritt zu verankern. Durch die kontrollierte, bereichsweise Materialkompression in den angrenzenden Zonen wird erreicht, dass die Verbindungselemente sehr starken Rückhalt selbst in stark porösen Material finden. Dadurch werden sehr hohe mechanische Auszugskräfte erreicht. Durch das zusätzliche räumliche Durchsetzen der komprimierten Verankerungszone und der angrenzenden Bereiche mit dem aufgeschmolzenen Material des Verbindungselementes unter hohem Druck unterhalb der Materialoberfläche wird erreicht, dass das komprimierte Material der Verankerungszone zusätzlich verfestigt wird. Eine optimale Verteilung der eingeleiteten Lasten und ein Abbau von schädlichen Spannungsspitzen wird daher gewährleistet. So ist es beispielsweise erstmals möglich selbst in mit einer Melaminschicht versehenen Spanplatten dauerhafte und belastungsresistente Verankerung von Lasteinleitungspunkten ohne Vorbohren in einem Arbeitsschritt zu realisieren. Durch Wärme und Druck wird das Holz plastisch verformt, die inneren Spannungen werden stark abgebaut oder egalisiert.

Im Unterschied zum Stand der Technik wirken die Verbindungselemente der hier offenbarten Erfindung nicht nur im Bereich der Oberfläche der zu verbindenden Elemente, sondern bevorzugt in deren Innern. Indem ein Vorbohren aller zu verbindenden Teile nicht erforderlich ist, was sich insbesondere verfahrensökonomisch günstig auswirkt, wird zudem erreicht, dass die Verankerungspunkte im Unterschied zu den aus dem Stand der Technik bekannten Verfahren, die ein Vorbohren der zu verbindenden Teile erfordern, höher belastbar sind. Ausserdem wird Staubbildung beim Verarbeitungsprozess weitgehend oder ganz vermieden. Durch das gezielte Abbauen von auftretenden Spannungsspitzen im Grundmaterial, ist es möglich selbst in sehr dünne Elemente sehr dicke Verbindungselemente ohne Vorbohren zu verankern. Versuche haben gezeigt, dass beispielsweise ein erfindungsgemässes Verbindungselement, das eine Dicke von ca. 8 mm aufweist, ohne Vorbohren in die Kantenfläche einer Pressspanplatte von ca. 20 mm Dicke verankert werden kann. Das Verankern von Lasteinleitungs- oder Verbindungsstellen in porösen Materialien wird also dramatisch rationalisiert. Dadurch dass zuvor ein Vorbohren der Teile nicht mehr erforderlich ist oder bei Bedarf im selben Schritt integriert ist, beispielsweise in dem das Verbindungselement vor dem Aufschmelzen zum Vorbohren dient, wird erstens Zeit gespart, zweitens können kostspielige Maschinen vermieden werden und drittens werden die sonst für das Vorbohren üblicherweise hohen Anforderungen an die Präzision verringert. Mit dem hier gezeigten Verfahren, können Teile daher ähnlich einfach verbunden werden wie z.B. mittels Nägeln: Nach einem Aufeinanderlegen der zu verbindenden Teile werden diese in einem Arbeitsschritt fest mittels einer stoff- und formschlüssigen Verbindung verbunden. Im Unterschied zum Nageln garantiert diese u.a. eine optimale Krafteinleitung in die zu verbindenden Teile.

Das erfindungsgemässe Verfahren schliesst nicht aus, dass bei Bedarf eines der zu verbindenden Teile vorgebohrt wird. Dadurch wird erreicht, dass dieses eine Führungswirkung für das Verbindungselement erfüllt. Das Verbinden von einem vorgebohrten Teil mit einem nicht vorgebohrten Teil stellt gegenüber dem Stand der Technik bekannten Verfahren ein signifikante Rationalisierung dar, da die hohen Anforderungen an die Genauigkeit von zwei Bohrungen, die exakt aufeinander stimmen müssen, nicht erforderlich ist.

Das vorteilhafte Anregen der Verbindungselemente mittels Ultraschall (oder einem äquivalenten Mittel) führt dazu, dass zwischen den aneinander reibenden Oberflächen eine sehr hohe Scherwirkung insbesondere parallel zur Hauptverbindungsrichtung erzielt wird. Diese führt dazu, dass die zum Aufschmelzen bestimmten Materialien, die in der Regel aus thermoplastischen Kunststoffen bestehen, dünnflüssig werden, wodurch ein tiefes Eindringen in die zu verbindenden Teile gewährleistet wird. Dies stellt einen massgeblichen Vorteil gegenüber den aus dem Stand der Technik bekannten Verfahren, die z.B. auf Reibung durch Rotation (Reibschweissen) beruhen und daher nur eine relativ geringe Scherwirkung aufweisen. Zudem wird beim Reibschweissen eine Bewegung senkrecht zur Schweissrichtung erzeugt, was sich bekanntermassen negativ auf die Verankerungstiefe auswirkt.

Vorteilhafterweise werden Verbindungselemente aus thermoplastischen Kunststoffen verwendet. Thermoplastische Kunststoffe weisen eine sehr hohe mechanische Dämpfung auf, welche sich in einer irreversiblen Energieabsorption äussert. Aufgrund der schlechten Wärmeleitfähigkeit von Kunststoffen macht sich diese besonders bei mit sehr hoher Frequenz (z.B. Ultraschall) angeregten Bauteilen bemerkbar, indem diese unkontrolliert aufschmelzen. Durch ein Beimischen von Stoffen, welche die mechanische Dämpfung gezielt kontrollieren, ist es erstmals möglich ein unkontrolliertes Aufschmelzen der Verbindungselemente zu vermeiden. Je nachdem wird eine höhere mechanische Belastbarkeit der Verbindungselemente beim Verarbeiten erreicht. Insbesondere beim mechanischen Durchbrechen der Deckschichten kann man eine erhöhte Robustheit erzielen, welche sich sekundär auch auf die spätere mechanische Belastbarkeit der Verbindungselemente auswirkt. Besonders vorteilhaft sind Werkstoffe wie Kalkpulver, Holzmehl, die sich isotrop verhalten, oder Werkstoffe wie Verstärkungsfasern, usw., die sich anisotrop verhalten. Über die Menge der zusätzlichen Materialkomponenten können die Eigenschaften der Verbindungselemente gezielt eingestellt werden. Die Verbindungselemente können auch partiell oder zonenweise eine höhere Konzentration der zusätzlichen Materialkomponente aufweisen. Dadurch können die Bereiche des Aufschmelzens zusätzlich kontrolliert werden.

Das Schwingverhalten der Verbindungselemente kann über die Frequenz, die Geometrie, die Masseverteilung sowie die Materialzusammensetzung gesteuert werden. Um besonders grosse Auslenkungen der Verbindungselemente zu erreichen, wird die Frequenz des Ultraschalls so gewählt, dass die Verbindungselemente mit ihrer Resonanz-, resp. Eigenfrequenz schwingen. Durch die Geometrie wird das Schwingverhalten, insbesondere das Eigenschwingverhalten zusätzlich optimiert und unterstützt. Beispielsweise durch Massekonzentrationen oder Dichtevariationen an geeigneten Stellen wird erreicht, dass sich die Verbindungselemente ähnlich wie Feder/Masse-Pendel mit einer oder mehreren Federn und Massen verhalten. Über eine gezielte Anisotropie der Materialien der Verbindungselemente wird erreicht, dass die Schallübertragung richtungsabhängig wird. So erzeugte Schallbrücken ermöglichen, dass die Schallenergie an bestimmte Orte geleitet und bei Bedarf konzentriert wird. Mögliche Schallbrücken können beispielsweise mittels Fasern gebildet werden. Durch eine örtliche Änderung der Materialzusammensetzung kann die mechanische Dämpfung, welche u.a. ein Mass für die partielle Energieabsorbtion des Materials darstellt, beeinflusst werden. Dadurch wird erreicht, dass sich die Verbindungselemente nur an diskreten, vorbestimmten Stellen erwärmen. Diese Anordnung hat einen weiteren signifikanten Vorteil: Im Unterschied zum Stand der Technik kann erreicht werden, dass sich die Verbindungselemente nicht über Reibungswärme von zwei aneinander reibenden Flächen erhitzen, sondern durch innere Erwärmung. Verbindungselemente mit den oben erwähnten Eigenschaften können beispielsweise durch Strangpressen von Fasern mit einer thermoplastischen Matrix, oder durch Mehrkomponentenspritzgiessen hergestellt werden. Insbesondere lassen sich entsprechende Verbindungselemente mit Energierichtungsgebern, wie sie aus dem Stand der Technik bekannt sind, ausstatten.

Über die Ultraschallfrequenz und die Geometrie können u.a. die Schwingungsformen der Verbindungselemente aktiv bestimmt sowie das Aufschmelzverhalten beeinflusst werden. Bei Bedarf ist es daher sinnvoll, die Frequenz in Funktion der Eindringtiefe des Verbindungselementes so zu steuern, dass die Schmelzzone, in der das Verbindungselement aufschmilzt, sich an optimaler Lage unterhalb der Oberfläche des Grundmaterials befindet. Die optimale Frequenz wird beispielsweise über einen Sensor ermittelt, der laufend die schwingende Länge des Verbingungselementes ermittelt. Für das Erzeugen der Ultraschallschwingungen kann eine handelsübliche Ultraschallschweissanlage verwendet werden. Für ein aktives Steuern der Frequenz muss diese modifiziert werden.

Anhand von Figuren wird die Erfindung anschliessend detailliert erläutert. Es versteht sich von selbst, dass die Idee die Erfindung hierbei nicht auf die gezeigte Ausführungsformen beschränkt ist.

Es zeigen:
- Figur 1: die wesentlichen Schritte des erfindungsgemässen Verfahrens anhand einer Schnittdarstellung,
- Figur 2: diverse Ausführungsformen von Verbindungselementen,
- Figur 3: eine weitere Ausführungsform eines Verbindungselementes,
- Figur 4: die wesentlichen Schritte des Verfahrens unter Verwendung des Verbindungselementes gemäss Figur 3,
- Figur 5: wie zwei Teile verbunden werden,
- Figur 6: wie zwei weitere Teile verbunden werden,
- Figur 7: wie ein Verbindungselement kontrolliert verarbeitet wird,
- Figur 8: schematisch einen Querschnitt durch einen Körper,
- Figur 9: einen Ausschnitt aus Figur 8,
- Figur 10: zeigt ein Diagramm.

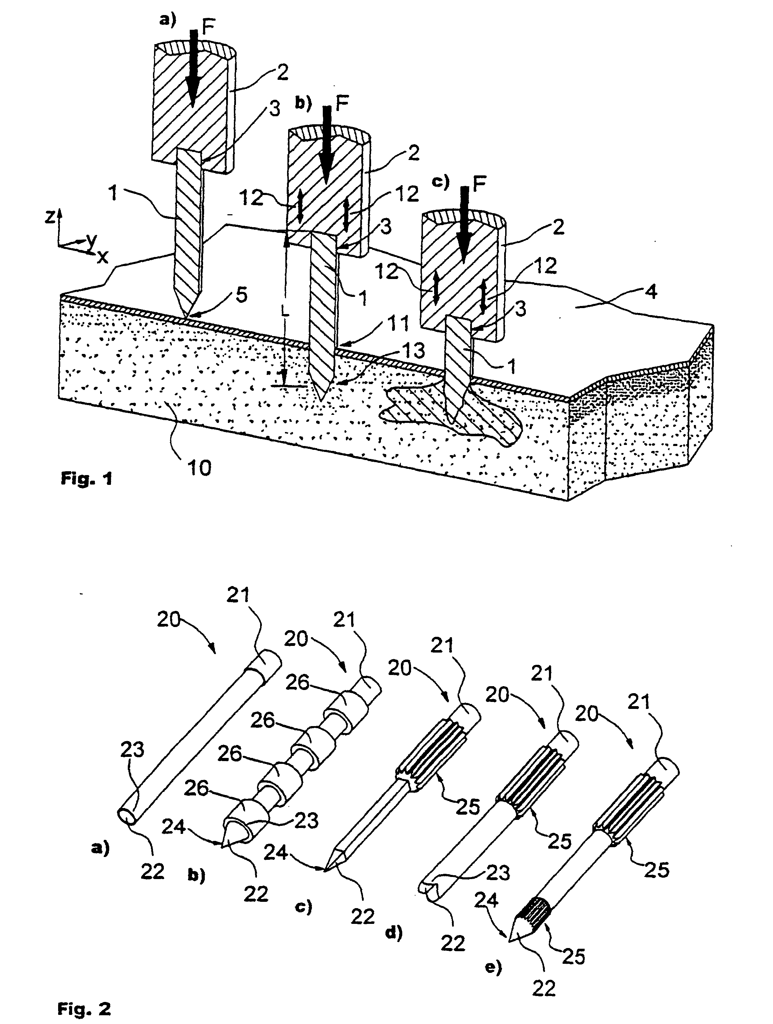

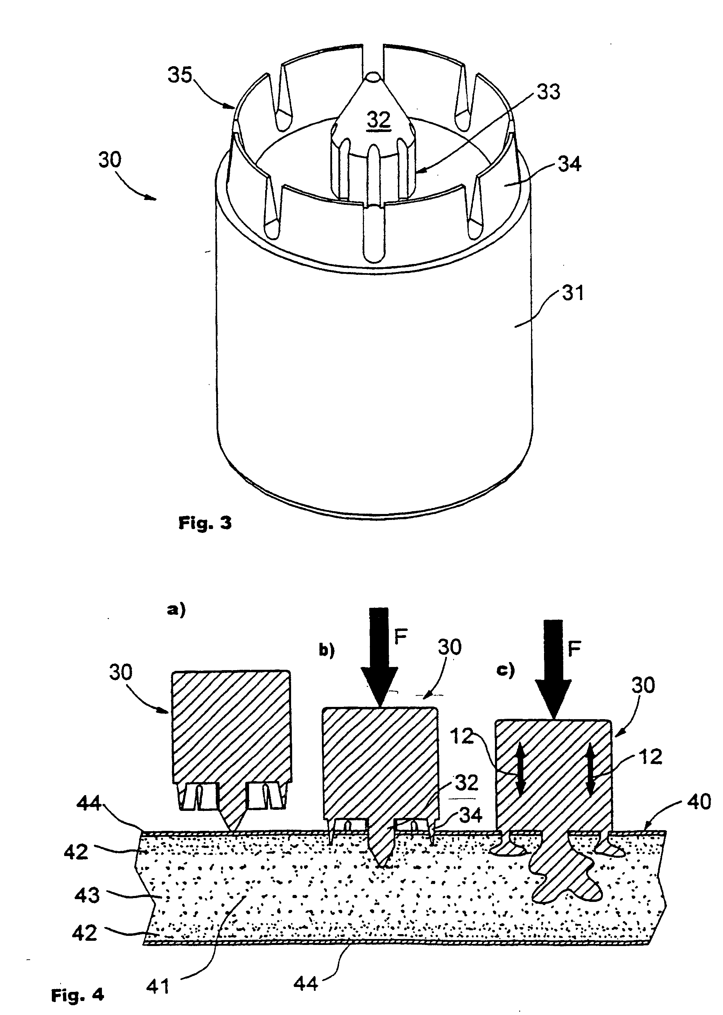

**Figur 1** zeigt schematisch die wesentlichen Schritte des erfindungsgemässen Verfahrens in einer Schnittdarstellung. Ein Verbindungselement, das hier die Form eines länglichen Dübels 1 aufweist, wird in einem porösen Grundmaterial 10, wie Holz, Pressspanplatten oder Zellbeton, tiefenwirksam verankert. Zu erkennen sind eine Halterung 2, vorteilhafterweise aus Metall, mit einer Öffnung 3, die zur temporären Aufnahme des Dübels 1 geeignet ist. Die Öffnung 3 ist so ausgestaltet, dass der Dübel 1 darin einen gewissen Halt und eine gewisse Führung findet, so dass er während dem Verarbeiten nicht herausfällt (Es versteht sich von selbst, dass der Dübel 1 auch durch externe Mittel gehalten werden kann). Insbesondere ist es vorteilhaft, dass die Öffnung und die Kopplung zwischen Dübel 1 und Halterung 2 so gestaltet sind, dass der Dübel 1 nicht unkontrolliert zu schmelzen beginnt. Ein Ultraschallerzeuger (nicht näher dargestellt), sowie ein Pressvorrichtung (nicht näher dargestellt) stehen mit der Halterung 2 in Wirkverbindung. Die Pressvorrichtung dient dazu, um über die Halterung 2 eine Kraft F auf den Dübel 1 auszuüben.

In einem ersten Schritt, dargestellt in Figur 1a), wird nun die Halterung 2 mit dem Dübel 1 so über einer Oberfläche 4 des Grundmaterials 10 platziert, dass ein Ende des Dübels 1, hier als Spitze 5 ausgeformt, auf die Oberfläche 4 zu liegen kommt. Anschliessend wird mittels der Pressvorrichtung (nicht näher dargestellt) die Kraft F erzeugt. Diese führt dazu, dass die Spitze 5 des Dübels 1 die Oberfläche 4 des Grundmaterials 10 durchbricht und in das Grundmaterial 10 eindringt. Das Grundmaterial 10 wird dadurch in diesem Bereich komprimiert. Nachdem die Spitze 5 des Dübels 1 eine gewisse Eindringtiefe (vgl. Figur 1b) und/oder die Kraft F eine gewisse definierte Grösse erreicht hat, wird der Dübel 1 mittels dem mit der Halterung 2 in Wirkverbindung stehenden Ultraschallerzeuger (nicht näher dargestellt) hier in Richtung der z-Achse in Schwingung versetzt. Dieser Vorgang ist mittels Pfeilen 12 verdeutlicht. Die Frequenz ist dabei auf die Geometrie des Dübels 1, insbesondere dessen Länge, Materialzusammensetzung und Massenverteilung abgestimmt. Dadurch wird erreicht, dass der Dübel 1 hier im Bereich einer vorbestimmten Zone 13 unterhalb der Oberfläche 4 aufschmilzt. Wie Figur 1b) verdeutlicht, sitzt der Dübel 1 pfropfenartig in einer Öffnung 11 und füllt diese, ähnlich einem Kolben in einem Hydraulikzylinder, dichtend aus. Das aufgeschmolzene Material des Dübels 1 kann nicht entweichen und steht, aufgrund der auf den Dübel 1 wirkenden Kraft F, unter hohem Druck. Dies bewirkt, dass das aufgeschmolzene Material des Dübels 1 in das Grundmaterial 10 gepresst wird, so dass allfällige Hohlräume ausgefüllt werden (vgl. Figur 1c). Die Ultraschallschwingungen und die entstandene Schmelzwärme wirken unterstützend.

Es handelt sich bei der hier gezeigten Ausführungsform um ein kontinuierliches Aufschmelzen des Dübels 1 in der Zone 13. Durch das Nachführen des Dübels 1 durch die Öffnung 11 in die Zone 13 und die Kraft F wird erreicht, dass der Druck unterhalb der Oberfläche aufrechterhalten bleibt. Durch die Schwingungsfrequenz und die anderen Prozessparameter wird die Schmelzzone 13 beeinflusst. Eine Länge L des Dübels 1 spielt hier eine gewisse Rolle, da sie u.a. mit dem Schwingverhalten zusammenhängt. Aufgrund des Aufschmelzens in der Zone 13 und dem Nachführen des Dübels 1 durch die Öffnung 11 verändert sich die Länge L des Dübels 1. Aus diesem Grund werden falls erforderlich die anderen Prozessparamter in Funktion der sich verändernden Grössen, wie z.B. der Länge L, überwacht und bei Bedarf während dem Prozess verändert. Die Länge L wird daher z.B. mit einem Sensor (nicht näher dargestellt) gemessen und als Regelgrösse für die Ultraschallfrequenz verwendet. Dadurch wird ein optimales Aufschmelzen des Dübels 1 erreicht.

**Figur 2** zeigt beispielhaft fünf verschiedene Ausführungsformen von Verbindungselementen 20. Die einzelnen Ausführungsformen eignen sich für unterschiedliche Anwendungen und Materialien. Es ist selbstverständlich, dass die Ausgestaltung stark von den hier gezeigten Formen abweichen kann. Um den unterschiedlichen Materialien und Anwendungsgebieten Rechnung zu tragen, werden die verschiedenen Verbindungselemente gezielt angepasst. Die hier gezeigten Verbindungselemente werden in der Regel während dem Verarbeiten an einem Ende 21 in einer Halterung (nicht näher dargestellt) festgehalten und kontrolliert. Die optimale Materialzusammensetzung variiert von Anwendungsfall zu Anwendungsfall und wird daher angepasst. Um die mechanische Dämpfung zu beeinflussen beinhalten die Verbindungselemente 20 zusätzliche Materialien z.B. wie Kalkpulver oder Verstärkungsfasern. Diese wirken sich z.T. zusätzlich positiv auf die mechanische Belastbarkeit beim Verarbeiten aus, sodass höhere Lasten oder schlankere und längere Verbindungselemente realisiert werden können. Die Gestaltung von Enden 22 sind für das Verhalten der Verbindungselemente 20 wichtig und bestimmen auch die spätere Materialverteilung im Grundmaterial. Diese sind daher insbesondere auf die Grundmaterialien abgestimmt. Flachere Ausgestaltungen der Enden 22 (vgl. Fig. 2a und 2d) neigen eher dazu, Material vor sich her zu schieben und eine stark komprimierte Zone vor dem Verbindungselemente 20 zu bilden. Diese wiederum unterstützt ein seitliches Verteilen des aufgeschmolzenen Materials. Scharfe Kanten 23 und Spitzen 24 erhöhen die Schneidwirkung der Verbindungselemente beim Durchstossen einer Deckschicht 4 eines Grundmaterials 10 (vgl. Figur 1). Ausserdem wirken diese auch auf das Schmelzverhalten der Verbindungselemente 20. Energierichtungsgebende Elemente, hier in Form von parallel zur Verbindungselementlängsachse verlaufenden Rippen 25, führen bei einer mechanischen Anregung z.B. mittels Ultraschall zu Konzentrationen, die ein lokales Aufschmelzen fördern. Durch lokale Massekonzentrationen, z.B. durch Verdickungen 26, wird das Schwingverhalten des Verbindungselementes 20 beeinflusst. Es ist in diesem Sinn auch möglich die Massekonzentrationen im Innern der Verbindungselemente 20 zu realisieren.

**Figur 3** zeigt eine weitere Ausführungsform eines Verbindungselementes 30 bestehend aus einem zylindrischen Teil 31, einem hier zentrisch angeordneten, spitzen Element 32. Dieses ist mit Rippen 33 versehen und dient zum Durchbrechen einer Oberfläche (vgl. Figur 4). Kreisförmig angeordnete Elemente 34 dienen ebenfalls zum Durchbrechen einer Oberfläche (vgl. Figur 4). Die Elemente 34 weisen Kanten 35 auf, die eine gewisse Schneidwirkung aufweisen. Das Verbindungselement ist beispielsweise Bestandteil eines Scharniers oder dient beispielsweise zum Befestigen eines Scharniers (nicht näher dargestellt) oder eines anderen Lasteinleitungspunktes bei Möbeln oder anderen Körpern aus Spanplatten oder ähnlichen Materialien oder kann selber zusätzliche Funktionen aufweisen. Insbesondere kann es auch zur Aufnahme weiterer Elemente beispielsweise Schrauben, usw. dienen. Eine Verankerung in porösen Materialien wie Holz, Zellbeton oder ähnlichen Materialien wie Beton oder Kunststoffen ist besonders vorteilhaft. Dabei ist das Vorbohren der zu verbindenden Oberflächen nicht erforderlich. Das Verbindungselement 30 besteht aus einem thermoplastischen Kunststoff. Dieser ist mit zusätzlichen Füllstoffen versehen, welche die innere mechanische Dämpfung beeinflussen. Damit wird das Aufschmelzverhalten kontrolliert und beeinflusst. Das Verbindungselement wird vorteilhafterweise mittels Spritzgiessen hergestellt. Durch das Verarbeiten von mehreren Komponenten wird erreicht, dass eine Gradierung im Verbindungselement 30 resultiert, die auf die zu verbindenden Grundmaterialien abgestimmt ist. Um die Verarbeitung von schwierigen Materialien zu ermöglichen, können die Elemente 32 und 34 auch so ausgestaltet werden, dass ihre Schneidwirkung durch eine sekundäre Bewegung erhöht wird. Beispielsweise können sie so ausgestaltet sein, dass durch eine Rotation das Grundmaterial unterstützend aufgebrochen wird. Das Verbindungselement 30 ist dabei vorteilhafterweise so ausgestaltet, dass es infolge der Sekundärbewegung nicht aufschmilzt.

**Figur 4** zeigt schematisch die Verarbeitung eines Verbindungselementes 30 gemäss Figur 3 in drei Schritten in einer Schnittdarstellung. Es versteht sich von selber, dass hier nur das Prinzip gezeigt wird. Selbstverständlich kann das Verbindungselement 30 auch eine andere Geometrie aufweisen oder mit anderen Elementen, wie beispielsweise Beschlägen, anderen Befestigungselementen oder Scharnieren verbunden sein. Das Verbindungselement 30 wird in einem ersten Schritt (vgl. Fig. 4a) über eine Oberfläche 40 eines Grundmaterials 41 gebracht. Das Grundmaterial besteht hier aus einem porösen Material, das an den Randzonen 42 eine höhere Dichte aufweist als in der Kernzone 43 (Selbstverständlich können auch Materialien verarbeitet werden, die eine konstante Dichte aufweisen). Deckschichten 44 bilden einen äusseren Abschluss des Grundmaterials. Das über der Oberfläche 40 positionierte Verbindungselement 30 wird durch eine Kraft F (vgl. Fig. 4b) so auf die Oberfläche 30 gepresst, dass die Elemente 32 und 34 diese durchstossen und bis zu einer gewissen Tiefe in das Grundmaterial 41 eindringen. Die Eindringtiefe ist dabei u.a. abhängig vom Grundmaterial 41, der Gestaltung der Elemente 32 und 34 und der Kraft F. Eine Sekundärbewegung, beispielsweise in Form einer Rotation, kann das Eindringen des Verbindungselementes 30 unterstützen. Nachdem eine gewisse Eindringtiefe erreicht worden ist, wird das Verbindungselement 30 mittels Ultraschall mechanisch angeregt, was durch Pfeile 12 verdeutlicht wird. Die mechanische Anregung erfolgt dabei vorteilhafterweise senkrecht zu Oberfläche 40. Infolge von Reibung und/oder innerer mechanischer Dämpfung findet eine Erhitzung des Verbindungselementes 30 statt. Diese führt dazu, dass die Elemente 32 und 34 kontrolliert unterhalb der Oberfläche 40 aufschmelzen. Durch die Kraft F sinkt das Verbindungselement weiter ein, sodass kontinuierlich Material aufgeschmolzen und unter hohem Druck ins Grundmaterial 41 gepresst wird. Das aufgeschmolzene Material des Verbindungselementes 30 füllt dabei allfällige Hohlräume aus, wodurch das Grundmaterial 42 zusätzlich verfestigt wird. Durch die Ultraschallschwingungen, die Hitze und den Druck wird das Grundmaterial 42 verdichtet und verfestigt, zudem wird erreicht, dass das Verbindungselement 30 erleichtert eindringt. Die Verankerung des Verbindungselementes 30 im Grundmaterial 41 ist schematisch in Figur 4c) dargestellt.

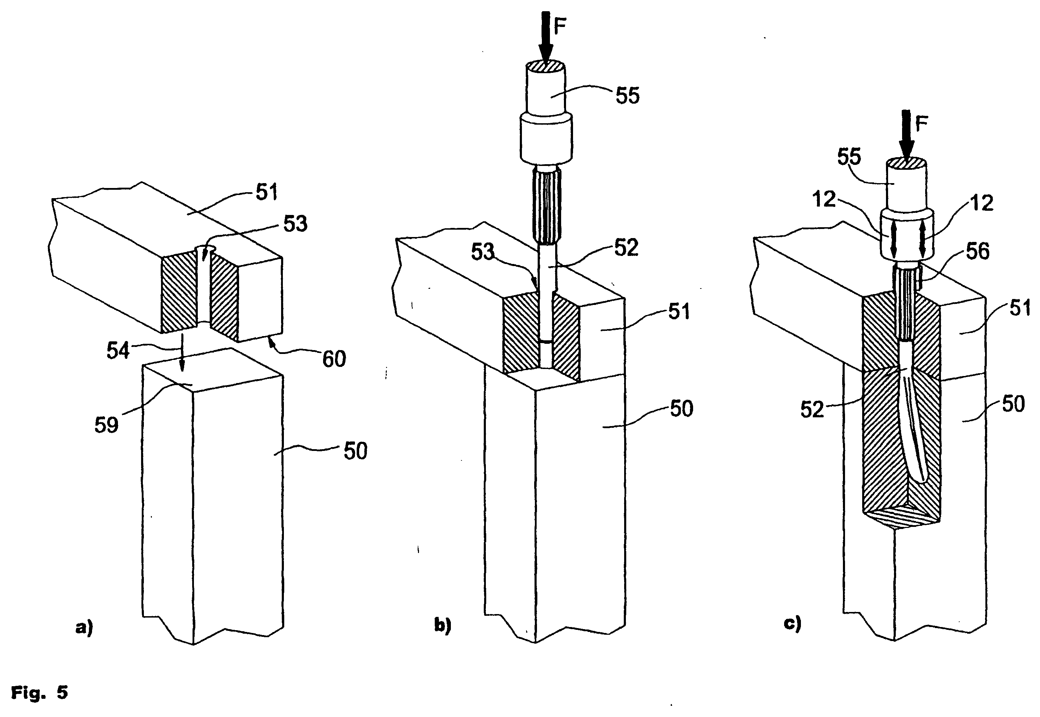

**Figur 5** zeigt schematisch die Verbindung von zwei Körper 50, 51, bspw. aus Holz, mittels einem länglichen Verbindungselement 52. Der Körper 51 ist hier mit einer Bohrung 53 versehen, die aber nicht zwingend erforderlich ist. Die beiden Körper 50 und 51 werden in einem ersten Schritt aufeinander gelegt (vgl. Fig. 5a), was durch einen Pfeil 54 verdeutlicht wird, und in ihrer endgültigen Position verankert. Das Verbindungselement 52 wird sodann in die Bohrung 53 gesteckt (vgl. Fig. 5b). Mittels einem Presskopf 55, der mit einer Pressvorrichtung (nicht näher dargestellt) und einem Ultraschallerzeuger (nicht näher dargestellt) in Wirkverbindung steht, wird eine Kraft F auf das Verbindungselement 52 ausgeübt, sodass dieses in die Oberfläche des Körpers 50 eingedrückt wird. Nachdem die Kraft F und/oder die Eindringtiefe einen gewissen vorbestimmten Wert erreicht haben, wird das Verbindungselement 52 mittels dem Ultraschallerzeuger (nicht näher dargestellt) mechanisch angeregt (dargestellt durch die Pfeile 12). Dadurch beginnt das Verbindungselement 52 gezielt aufzuschmelzen und in den Körper 50 einzudringen (vgl. Fig. 5c). Dabei wird das Material des Körpers 50 gezielt verdichtet und allfällige Hohlräume mit dem aufgeschmolzenen Material des Verbindungselementes 52 durchsetzt. Rippen 56 oder ähnlich wirkende Elemente am Verbindungselement 52 führen dazu, dass nach dem Erreichen einer gewissen Eindringtiefe des Verbindungselementes 52 in den Körper 50 eine Verbindung zwischen dem Körper 51 und dem Verbindungselement 52 stattfindet. Nachdem das Verbindungselement die gewünschte Tiefe erreicht hat, resultiert eine feste Verbindung zwischen den beiden Körper 50 und 51. Aufgrund der Tatsache, dass ein Vorbohren beider Körper nicht erforderlich ist, kann die Verbindung in einem Arbeitsschritt auf rationellste Art und Weise erfolgen. Bei Bedarf kann das Verbindungselement 52 an seiner Oberfläche mit zusätzlichen Elementen versehen werden. Diese führen dazu, dass durch eine sekundäre Bewegung des Verbindungselementes 52 (bspw. eine Rotation um die Längsachse) unter der Kraft F ein leichteres Eindringen, unter Inkaufnahme einer gewissen Spanbildung, resultiert. Diese sekundäre Bewegung führt jedoch nicht zu einem unkontrollierten Aufschmelzen des Verbindungselementes 52. Um die Verbindung zwischen den beiden Körper 50 und 51 zu unterstützen oder um eine gewisse Dichtwirkung zu erzielen, ist es vorteilhaft Flächen 59 und 60 mit einer Schicht aus schmelzbarem Material zu versehen. Diese Schicht kann auch zusätzlich eingebracht werden. Durch die über das Verbindungselement 52 oder direkt eingebrachten Ultraschallschwingungen wird erreicht, dass diese Schicht aufgrund von Reibung und/oder innerer mechanischer Dämpfung aufschmilzt. Dadurch wird die Verbindung zwischen den beiden Körper 50 und 51 durch das Verbindungselement 52 zusätzlich unterstützt und gedichtet. Das hier gezeigte Verfahren eignet sich beispielsweise besonders für die Verbindung von Fensterrahmen oder ähnlichen Elementen. Dabei ist es erstmals möglich sehr dünne, schlanke Körper ohne präzises Vorbohren so zu verbinden, dass eine maximale mechanische Belastbarkeit erreicht wird.

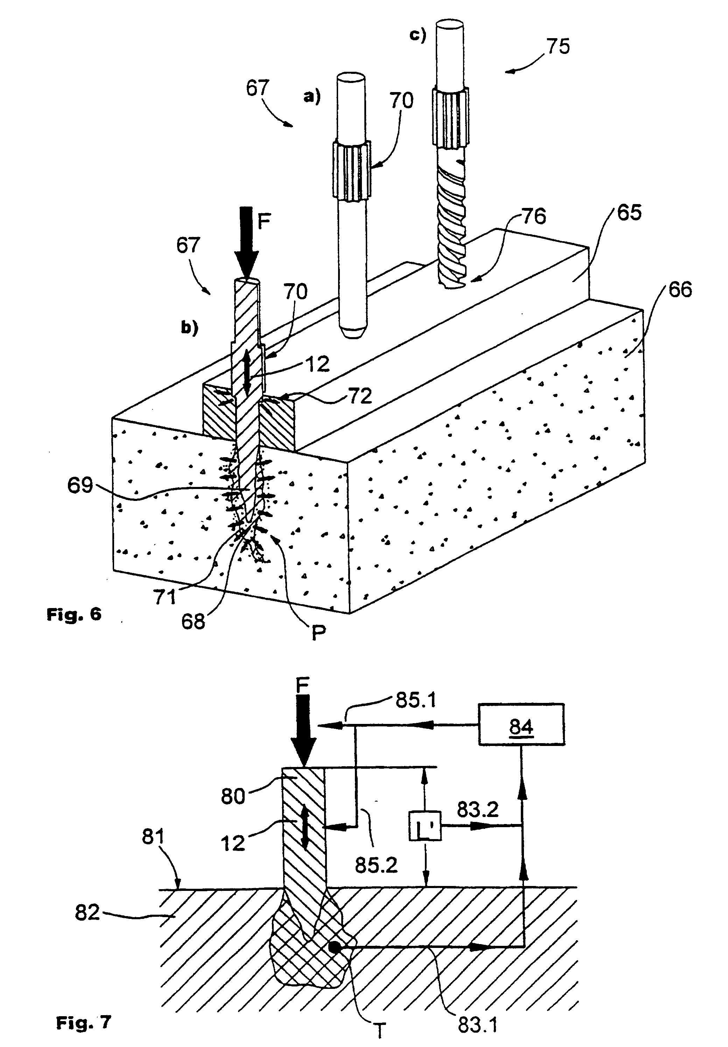

**Figur 6**: Figur 6a) zeigt einen ersten Körper 65, einen zweiten Körper 66 und ein Verbindungselement 67. Beim ersten Körper 65 handelt es sich hier um einen Balken aus Holz und beim zweiten Körper 66 um ein Mauerwerk, beispielsweise Zellbeton. Das Verbindungselement 67 besteht aus einem thermoplastischen Material und, falls erforderlich, einem Zusatzstoff der die innere mechanische Dämpfung des thermoplastischen Materials reguliert. Figur 6b) zeigt das Verbindungselement 67 und die Körper 65 und 66 in einer Schnittdarstellung während dem Verarbeitungsprozess. Im hier gezeigten Zustand, bei dem es sich um eine Momentaufnahme handelt, hat das Verbindungselement 67 den ersten Körper 65 durchstossen und dringt in den zweiten Körper 66 ein. Eine Kraft F wirkt auf das Verbindungselement 67. Gleichzeitig wird das Verbindungselement 67 in Richtung seiner Längsachse durch Ultraschall, dargestellt durch einen Pfeil 12, mechanisch angeregt. Dadurch schmilzt dieses im Innern des zweiten Körpers 66, im Bereich einer Zone 68, kontrolliert auf. Um eine unterstützende Führungswirkung auf das Verbindungselement 67 zu erzielen, ist es möglich den ersten Körper 66 vorzubohren. Eine Kernzone 69 des Verbindungselementes 67 bleibt während dem Aufschmelzvorgang vorerst fest, was u.a. dazu führt, dass das Grundmaterial des zweiten Körpers 66 in einer Zone 71 kontrolliert komprimiert wird, ohne dass schädliche Spannungen aufgebaut werden. Durch die Kraft F wird das Verbindungselement 67 kontinuierlich nachgeführt, sodass das in der Zone 68 aufgeschmolzene Material des Verbindungselementes 67 unter hydraulischem Druck, dargestellt durch Pfeile P, steht und ins Innere des zweiten Körpers 66 gepresst wird. Dadurch und durch die mechanische Anregung mittels Ultraschall werden schädliche Spannungen im Grundmaterial des zweiten Körpers 66 gezielt abgebaut. Das Verbindungselement 67 weist hier gewisse energierichtungsgebende Elemente 70 (vgl. Figur 6a) auf, die nach erreichen einer gewissen Eindringtiefe dazu führen. dass das Verbindungselement 67 partiell im Bereich des ersten Körpers 65 aufschmilzt und sich stoffschlüssig mit diesem verbindet. Dies ist schematisch mittels Pfeilen 72 verdeutlicht, Nach dem Erkalten des aufgeschmolzenen Materials ist das Verbindungselement 67 stoff- und formschlüssig mit den Körpern 65 und 66 verbunden, was in sehr hoch belastbaren mechanischen Verbindungen resultiert. Um die Kontaktflächen zwischen dem ersten Körper 65 und dem zweiten Körper 66 gegen Umwelteinflüsse zu dichten, können die Kontaktflächen mittels einem thermisch schmelzbaren Lack oder einer anderen Beschichtung versehen werden, die beim mechanischen Anregen mittels Ultraschall aufschmilzt. Dadurch wird erreicht, dass die Kontaktflächen zusätzlich dichtend verbunden werden. Figur 6c) zeigt eine weitere Ausführungsform eines Verbindungselementes 75 welches zur Verbindung der Körper 65 und 66 geeignet ist. Im Unterschied zum Verbindungselement 67 (vgl. Figur 6a) weist das Verbindungselement 75 gewisse Ähnlichkeiten mit einem Bohrer auf An einem Ende 76 weist das Verbindungselement 75 eine Gestaltung auf, die ein partielles Eindringen durch Überlagern einer Sekundärbewegung in zumindest einen der Körper 65 und 66 unterstützt. Diese Sekundärbewegung kann beispielsweise durch eine Rotation um die Längsachse realisiert werden, die aber nicht zum unkontrollierten Aufschmelzen des Verbindungselementes 75 führt. Nachdem eine gewisse Eindringtiefe in eines der Teile erreicht ist, wird mit dem Verbindungselement 75 gleich verfahren wie mit dem Verbindungselement 67 (vgl. Figur 6a und 6b).

**Figur 7** zeigt schematisch eine Möglichkeit für die optimale Regelung des erfindungsgemässen Verfahrens, bei dem ein Verbindungselement 80 in eine Oberfläche 81 eines Körpers 82 eindringt. Die für den Verarbeitungsprozess relevanten Messgrössen sind u.a. die freie Länge L' des Verbindungselementes 80 und die Temperatur T des aufgeschmolzenen Materials und der Umgebung. Diese werden massgeblich durch die Grösse der Kraft F, die Energie der Ultraschallschwingungen (Frequenz, Amplitude), dargestellt durch einen Pfeil 12, und die Vorschubgeschwindigkeit, mit der das Verbindungselement in die Oberfläche 81 eindringt, bestimmt. Um eine optimale Verarbeitung des Verbindungselementes 80 zu gewährleisten, werden diese Grössen während dem Prozess überwacht und zur Ermittlung der erforderlichen Stellgrössen verwendet. Das Ermitteln der Temperatur T, vorzugsweise indirekt, und der freien Länge L' ist schematisch durch die Pfeile 83.1 und 83.2 dargestellt. Die Stellgrössen werden in einem geeigneten Prozessrechner 84 ermittelt und zur Regelung der Kraft F (Pfeil 85.1), der Vorschubgeschwindigkeit (nicht näher dargestellt) des Verbindungselementes 80, der Ultraschallfrequenz und Amplitude (Pfeil 85.2) verwendet. Dadurch wird erreicht, dass eine optimale, tiefenwirksame Verbindung zwischen dem Verbindungselement 80 und dem Körper 82 erreicht wird.

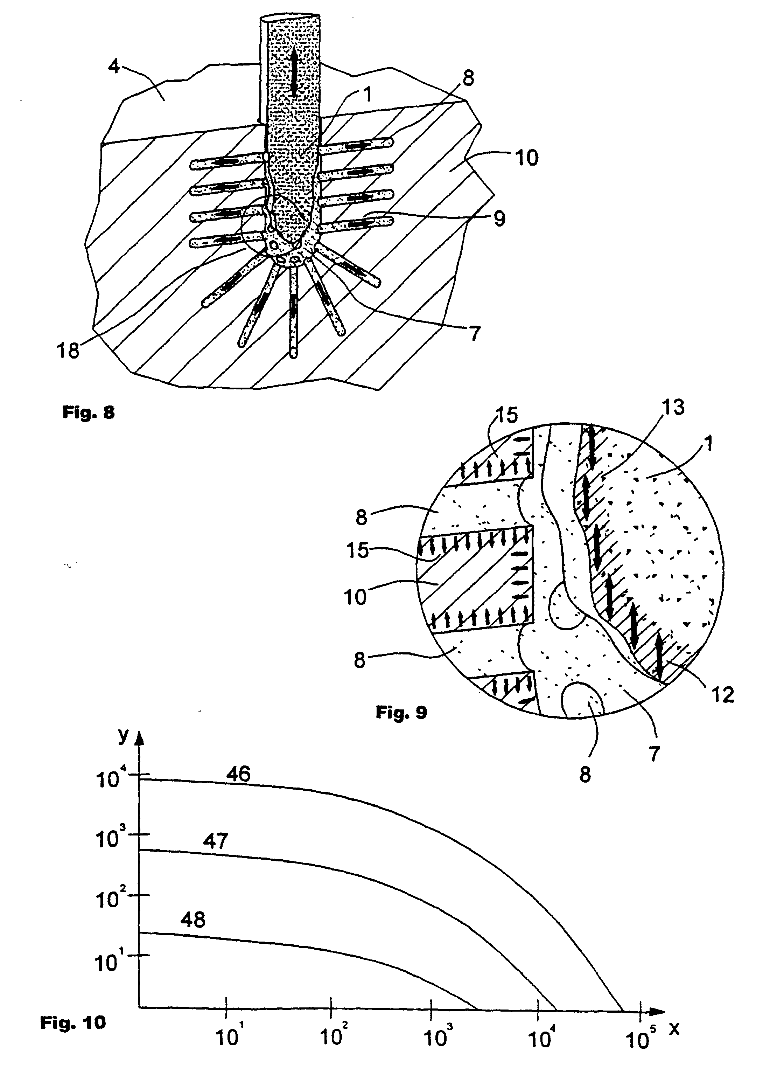

**Figur 8** zeigt schematisch und stark vereinfacht die hydraulische Funktionsweise der Erfindung anhand einer perspektivischen Schnittdarstellung. Zu erkennen sind ein Verbindungselement 1 das durch eine Oberfläche 4 in einen Körper 6 eingedrungen ist. Im Innern des Körpers 6 befindet sich ein Hohlraum 7 der mit dünnen Kanälen oder Kapillaren 8 gekoppelt ist und durch das Verbindungselement 1 verschlossen wird. Die Kanäle 8 und der Hohlraum 7 sind mit aufgeschmolzenem Material 14 gefüllt. Longitudinalwellen eines Ultraschallerzeugers (nicht näher dargestellt) werden kraft- oder formschlüssig in das Verbindungselement 1, eingekoppelt. Über starke Inhomogenitäten in der Spannungsverteilung, mit maximalen Spannungskonzentrationen in den Bereichen, in denen eine Verbindung erzielt werden soll, wird durch Umwandlung von mechanischer Energie Wärme erzeugt. Die Wärme entsteht typischerweise über Verlust, z.B. mechanische Hysterese (Hysterese-Verluste) oder Friktion. Durch Beaufschlagung des Verbindungselement 1 auf eine inhomogene oder poröse Oberfläche entsteht im mikroskopischen Bereich des Verbindungselementes eine hohe, innere Scherwirkung (vgl. Figur 9). Diese Scherwirkung zusammen mit der Temperaturerhöhung bewirken, dass das Material des Verbindungselementes 1 aufschmilzt, wobei eine sehr starke Abnahme der Viskosität der Schmelze auftritt. Durch die erfindungsgemässe Applikation von Ultraschall ist es möglich sehr gezielt und in einer optimalen Zone niedrigviskose Schmelze zu erzeugen, die unter hydraulischem Druck in die feinsten Poren, Risse und kapillaren Öffnungen eindringt (Pfeile 9). Die Schmelze ist typischerweise anisotrop, weist also richtungsabhängige Eigenschaften auf. Insbesondere bei der Applikation von Ultraschall ist zu beobachten, dass die Viskosität der Schmelze, im Unterschied zu anderen aus dem Stand der Technik bekannten Verfahren, um mehrere Zehnerpotenzen reduzierbar ist. Diese starke Verflüssigung gemeinsam mit dem hydraulischen Druck, der durch das Einpressen des Verbindungselementes 1 in den Hohlraum 7 erzielt wird, dringt das aufgeschmolzene Material bis in mikroskopische Bereich in die Porenstruktur des Verbindungsmateriales ein. Dabei folgt die Schmelze des Verbindungselementes 1 im Wesentlichen der Orientierung des Grundmateriales 10 und verfestigt und armiert dieses. Als Resultat entsteht eine kompositartige Verbindung mit einem fliessenden Übergang vom Grundmaterial 10 in das Verbindungselement 1 mit einer gezielten Verfestigung im Bereich um den Hohlraum 7 und einem festen homogenen Kern.. Entsprechende Verbindungen sind den konventionellen, aus dem Stand der Technik bekannten Verbindungsmethoden insb. bezüglich Festigkeitswerten weit überlegen ist. Ein Ausschnitt aus Figur 8 ist in Figur 9 vergrössert dargestellt.

**Figur 9** zeigt vergrössert einen Ausschnitt 18 der modellmässigen Betrachtung aus Figur 8. Zu erkennen sind das Verbindungselement 1, der Hohlraum 7 und Kanäle 8, die sich in das Grundmaterial 10 erstrecken. Das aufgeschmolzene Material 14 füllt den Hohlraum 7 und die Kanäle 8 aus und steht unter hydraulischem Druck, was durch Pfeile 15 dargestellt ist. Durch die mechanische Anregung des Verbindungselementes 1 mittels Ultraschall bildet sich eine Schmelzzone 13 aus, in der Material infolge hoher Scherwirkung erhitzt und aufgeschmolzen wird. Die Bewegung des Verbindungselementes 1 infolge der mechanischen Anregung und der dadurch hervorgerufenen Scherwirkung ist schematisch durch Pfeile 12 dargestellt. Durch den hohen hydraulischen Druck, der sich durch das Einpressen des Verbindungselementes 1 in den Hohlraum 7 ergibt, wird das aufgeschmolzene Material u.a. in Hohlräume 8 verdrängt. Zwischen dem aufschmelzenden Material, dem verdrängten Material und dem von aussen nachgeförderten Material wird ein Gleichgewicht erwirkt, so dass sich ein kontinuierlicher Ablauf einstellt.

**Figur 10** zeigt anhand von drei Kurven 46, 47, 48 einen typischen Zusammenhang zwischen der Scherwirkung (x-Achse) und der Viskosität (y-Achse) eines thermoplastischen Kunststoffes, wie er beispielsweise für ein Verbindungselement 1 Verwendung findet. Die drei Kurven 46, 47, 48 zeigen das Verhalten bei unterschiedlichen Temperaturen. Die Kurve 46 zeigt das Verhalten bei einer tieferen Temperatur; die Kurve 47 bei einer höheren und die Kurve 48 bei der höchsten Temperatur. Zu erkennen ist, dass die Viskosität (y-Achse) bei zunehmender Scherwirkung (x-Achse) und steigender Temperatur abnimmt. Mit anderen Worten der Kunststoff wird dünnflüssiger bei höheren Temperaturen und grösseren Scherwirkungen. Im Falle der hier diskutierten Erfindung bedeutet dies, dass durch Erhöhung der mechanischen Anregung mittels Ultraschall über die Frequenz und die Amplitude Einfluss auf das Verhalten des aufzuschmelzenden Stoffs genommen wird. Da in der Regel keine externe thermische Energiequelle verwendet wird, stellt sich die Temperatur im Innern des Hohlraumes 7 (vgl. Figuren 8 und 9) infolge der mechanischen Parameter und der Wärmeleitfähigkeit der Umgebung ein. Das Verhalten wird so eingestellt, dass die Umgebung und das Material des Verbindungselements optimales Verhalten zeigen und kein unkontrolliertes Aufschmelzen des Verbindungselementes 1 stattfindet.

## Patentansprüche

1. Verfahren zum Verbinden von Körpern (41, 50, 51, 65, 66) mittels thermischem Aufschmelzen eines Verbindungselementes (1, 20, 30, 52, 67, 75, 80), wobei das Verbindungselement (1, 20, 30, 52, 67, 75, 80) mittels einer gerichteten Kraft (F) in mindestens einen der Körper (41, 50, 51, 65, 66) eingepresst wird, während eine mechanische Anregung derart erzeugt wird, dass während des Eindringens des Verbindungselementes (1, 20, 30, 52, 67, 75, 80) in den mindestens einen Körper (41, 50, 51, 65, 66) der Vorschub über die gerichtete Kraft (F) und das Aufschmelzen durch die mechanische Anregung aufrecht erhalten wird, damit aufgeschmolzenes Material hydraulisch in die Umgebung verdrängt werden kann, **dadurch gekennzeichnet, dass** das Verbindungselement mit der gerichteten Kraft vor der mechanischen Anregung durch eine Oberfläche des einen der Körper gestossen wird.

2. Verfahren gemäss Patentanspruch 1 **dadurch gekennzeichnet, dass** die mechanische Anregung nach Erreichen einer vorbestimmten Eindringtiefe des Verbindungselementes (1, 20, 30, 52, 67, 75, 80) in einen der Körper (41, 50, 51, 65, 66) und/oder nach Erreichen eines vorbestimmten Lastniveaus der gerichteten Kraft (F) einsetzt.

3. Verfahren gemäss Patentanspruch 2, **dadurch gekennzeichnet, dass** die mechanische Anregung mittels Ultraschall erfolgt.

4. Verfahren gemäss Patentanspruch 2, **dadurch gekennzeichnet, dass** die mechanische Anregung mittels Rotation erfolgt.

5. Verfahren gemäss Patentanspruch 1, **dadurch gekennzeichnet, dass** dem Eindringen eines Verbindungselementes (1, 20, 30, 52, 67, 75, 80) in einen der Körper (41, 50, 51, 65, 66) eine sekundäre Bewegung überlagert wird, die das Eindringen unterstützt.

6. Verfahren gemäss Patentanspruch 5, **dadurch gekennzeichnet, dass** die sekundäre Bewegung eine Rotation darstellt.

7. Verfahren gemäss Patentanspruch 1, **dadurch gekennzeichnet, dass** mindestens zwei Körper (41, 50, 51, 65, 66) mittels einem Verbindungselement (1, 20, 30, 52, 67, 75, 80) verbunden werden.

8. Verfahren gemäss Patentanspruch 7, **dadurch gekennzeichnet, dass** zwischen den gemeinsamen Oberflächen (59, 60) der zu verbindenden Körper (41, 50, 51, 65, 66) eine zusätzliche Schicht aus einem schmelzbaren Material vorhanden ist, die infolge einer mechanischen Anregung aufschmilzt und die Verbindung zwischen den Körpern (41, 50, 51, 65, 66) unterstützt, resp. dichtet.

9. Verfahren gemäss Patentanspruch 7, **dadurch gekennzeichnet, dass** einer der Körper (41, 50, 51, 65, 66) eine Bohrung (53) zur Aufnahme eines Verbindungselementes (52) aufweist.

10. Verfahren gemäss Patentanspruch 1, **dadurch gekennzeichnet, dass** mindestens einer der zu verbindenden Körper (41, 50, 51, 65, 66) aus porösem Material besteht.

11. Verbindungselement zur Verwendung im Verfahren gemäss Patentanspruch 1, welches Verbindungselement (20) aus einem thermoplastischen Kunststoff besteht, stiftförmig ist und mindestens einen Bereich mit einem kleineren und mindestens einen Bereich mit einem grösseren Querschnitt aufweist, **dadurch gekennzeichnet, dass** das Verbindungselement in mindestens einem der Bereiche energierichtungsgebende Elemente in Form von längsverlaufenden Rippen (25, 33) aufweist..

12. Verbindungselement gemäss Patentanspruch 11, **dadurch gekennzeichnet, dass** das Verbindungselement (20, 30) zumindest über einen Teil seiner Länge einen runden Querschnitt aufweist.

13. Verbindungselement gemäss einem der Patentansprüche 11 oder 12, **dadurch gekennzeichnet, dass** das Verbindungselement (20) ein spitzes oder ein flaches Ende zum Durchstossen einer Oberfläche aufweist.

14. Verbindungselement gemäss einem der Patentansprüche 11 oder 12, **dadurch gekennzeichnet, dass** das Verbindungselement (20) eine scharfe Kante (23) aufweist, welche die Schneidwirkung beim Durchstossen einer Deckschicht (4) erhöht.

15. Verbindungselement gemäss Patentanspruch 11, **dadurch gekennzeichnet, dass** das Verbindungselement (30) einen zylindrischen Teil (31) aufweist, an dessen einen Stirnfläche zentrisch ein spitzes Element (32) angeordnet ist, das von einem Ring von kreisförmig angeordneten Elementen (34) umgeben ist.

16. Verbindungselement gemäss Anspruch 15, **dadurch gekennzeichnet, dass** die kreisförmig angeordneten Elemente (34) Kanten (35) aufweisen, die zum Durchstossen einer Oberfläche (40) dienen.

17. Verbindungselement (30) gemäss einem der Ansprüche 15 oder 16, **dadurch gekennzeichnet, dass** das Verbindungselement (1, 20, 30, 52, 67, 75, 80) zur Aufnahme von einem Befestigungselement oder einem Scharnier dient.

18. Verbindung hergestellt nach dem Verfahren gemäss einem der Ansprüche 1 bis 10 mit einem oder mehreren Verbindungselementen gemäss einem der Ansprüche 11 bis 17, **dadurch gekennzeichnet, dass** aufgeschmolzenes Material eines Verbindungselementes (67) im Gefüge eines komprimierten Grundmaterials eines Körpers (66) ausgehärtet ist.

## Claims

1. Method for the joining of bodies (41, 50, 51, 65, 66) by means of thermally melting a joining element (1, 20, 30, 52, 67, 75, 80) wherein the joining element (1, 20, 30, 52, 67, 75, 80) by means of a directed force (F) is pressed into at least one of the bodies (41, 50, 51, 65, 66), whereas a mechanical excitation is generated in such a manner, that during the penetration of the joining element (1, 20, 30, 52, 67, 75, 80) into the at least one body (41, 50, 51, 65, 66) the advance movement is maintained through the directed force (F) and the melting down is maintained, in a manner that molten material is hydraulically displaceable into the surroundings, **characterised in that** the joining element is pushed through a surface of one of the at least one body by means of the directed force before the mechanical excitation.

2. Method in accordance with claim 1, **characterised in that** the mechanical excitation is applied after a predetermined depth of penetration of the joining element (1, 20, 30, 52, 67, 75, 80) into one of the bodies (41, 50, 51, 65, 66) has been achieved and/or after a predetermined load level of the directed force (F) has been reached.

3. Method according to claim 2, **characterised in that** the mechanical excitation takes place by means of ultrasound.

4. Method in accordance with claim 2, **characterised in that** the mechanical excitation takes place by means of rotation.

5. Method according to claim 1, **characterised in that** a secondary movement is superimposed on the penetration of the joining element (1, 20, 30, 52, 67, 75, 80) into one of the bodies (41, 50, 51, 65, 66), which assists the penetration.

6. Method in accordance with claim 5, **characterised in that** the secondary movement represents a rotation.

7. Method according to claim 1, **characterised in that** at least two bodies (41, 50, 51, 65, 66) are joined by means of a joining element (1, 20, 30, 52, 67, 75, 80).

8. Method in accordance with claim 7, **characterised in that** between the common surfaces (59, 60) of the bodies to be joined (41, 50, 51, 65, 66) an additional layer made out of a meltable material is present, which as a result of the mechanical excitation melts and assists, resp., seals the joint between the bodies (41, 50, 51, 65, 66).

9. Method according to claim 7, **characterised in that** one of the bodies (41, 50, 51, 65, 66) comprises a bore (53) for receiving a joining element (52).

10. Method in accordance with claim 1, **characterised in that** at least one of the bodies to be joined (41, 50, 51, 65, 66) consists of porous material.

11. Joining element for utilisation in the method in accordance with claim 1, which joining element (20) consists of a thermo-plastic material, is pin-shaped and comprises at least one zone with a smaller and at least one zone with a larger cross section, **characterised in that** the joining element comprises, in at least one of the zones, direction-giving elements for energy in the shape of longitudinally aligned ribs (25, 33).

12. Joining element according to claim 11, **characterised in that** the joining element (20, 30), over at least part of its length comprises a circular cross section.

13. Joining element in accordance with one of the claims 11 or 12, **characterised in that** the joining element (20) comprises a pointed or flattened end for pushing through a surface.

14. Joining element according to one of the claims 11 or 12, **characterised in that** the joining element (20) comprises a sharp edge (23), which increases the cutting effect when pushing through a covering layer (4).

15. Joining element in accordance with claim 11, **characterised in that** the joining element (30) comprises a cylindrical part (31) on the face of which a pointed element (32) is arranged which is surrounded by a ring of elements (34) arranged in circular manner.

16. Joining element (30) in accordance with claim 16, **characterised in that** the elements (34) arranged in a circle comprise edges (35), which serve to push through a surface (40).

17. Joining element (30) according to one of the claims 15 or 16, **characterised in that** the joining element (1, 20, 30, 52, 67, 75, 80) serves for receiving a fixing element or a hinge.

18. Joint manufactured in accordance with the method according to one of the claims 1 to 10, with one or several joining elements in accordance with one of the claims 11 to 17, **characterised in that** melted down material of the joining element (67) is hardened within the structure of a compressed base material of the body (66).

## Revendications

1. Procédé pour la liaison d'objets (41, 50, 51, 65, 66) au moyen d'une fusion thermique d'un élément de liaison (1, 20, 30, 52, 67, 75, 80), l'élément de liaison (1, 20, 30, 52, 67, 75, 80) étant pressé au moyen d'une force directionnelle (F) dans l'un au moins des objets (41, 50, 51, 65, 66), tandis qu'une excitation mécanique est produite de telle sorte que l'avancement par la force directionnelle (F) et la fusion par l'excitation mécanique soient maintenus pendant la pénétration de l'élément de liaison (1, 20, 30, 52, 67, 75, 80) dans l'objet (41, 50, 51, 65, 66) au nombre d'un au moins, afin que du matériau fondu puisse être repoussé de façon hydraulique dans l'environnement, **caractérisé en ce que** l'élément de liaison est poussé par la force directionnelle avant l'excitation mécanique à travers une surface de l'un des objets.

2. Procédé selon la revendication 1, **caractérisé en ce que** l'excitation mécanique est appliquée lorsqu'une profondeur de pénétration prédéterminée de l'élément de liaison (1, 20, 30, 52, 67, 75, 80) dans l'un des objets (41, 50, 51, 65, 66) a été atteinte et/ou lorsque la force directionnelle (F) a atteint un niveau de charge prédéterminé.

3. Procédé selon la revendication 2, **caractérisé en ce que** l'excitation mécanique est produite au moyen d'ultrasons.

4. Procédé selon la revendication 2, **caractérisé en ce que** l'excitation mécanique est produite au moyen d'une rotation.

5. Procédé selon la revendication 1, **caractérisé en ce qu'**à la pénétration d'un élément de liaison (1, 20, 30, 52, 67, 75, 80) dans l'un des objets (41, 50, 51, 65, 66) est superposé un mouvement secondaire qui facilite la pénétration.

6. Procédé selon la revendication 5, **caractérisé en ce que** le mouvement secondaire est une rotation.

7. Procédé selon la revendication 1, **caractérisé en ce qu'**au moins deux objets (41, 50, 51, 65, 66) sont liés au moyen d'un élément de liaison (1, 20, 30, 52, 67, 75, 80).

8. Procédé selon la revendication 7, **caractérisé en ce qu'**il est prévu entre les surfaces communes (59, 60) des objets (41, 50, 51, 65, 66) à relier, une couche supplémentaire faite de matériau fusible qui fond à la suite d'une excitation mécanique et renforce ou rend étanche l'assemblage des objets (41, 50, 51, 65, 66).

9. Procédé selon la revendication 7, **caractérisé en ce que** l'un des objets (41, 50, 51, 65, 66) présente un trou (53) destiné à recevoir un élément de liaison (52).

10. Procédé selon la revendication 1, **caractérisé en ce que** l'un au moins des objets (41, 50, 51, 65, 66) à assembler est fait d'un matériaux poreux.

11. Élément de liaison destiné à être utilisé dans le procédé selon la revendication 1, lequel élément de liaison (20) se compose d'un polymère synthétique thermoplastique, est en forme de goujon et présente au moins une zone de section relativement petite et au moins une zone de plus grande section, **caractérisé en ce que** l'élément de liaison présente dans l'une au moins des zones des éléments orientant l'énergie sous la forme de nervures longitudinales (25, 33).

12. Élément de liaison selon la revendication 11, **caractérisé en ce que** l'élément de liaison (20, 30) a une section ronde sur au moins une partie de sa longueur.

13. Élément de liaison selon l'une des revendications 11 ou 12, **caractérisé en ce que** l'élément de liaison (20) possède une extrémité pointue ou plate destinée à perforer une surface.

14. Élément de liaison selon l'une des revendications 11 ou 12, **caractérisé en ce que** l'élément de liaison (20) présente un bord coupant (23) qui augmente l'effet de coupe lors de la perforation d'une couche de couverture (4).

15. Élément de liaison selon la revendication 11, **caractérisé en ce que** l'élément de liaison (30) présente une partie cylindrique (31) dont une face frontale porte un élément pointu (32) centré qui est entouré par un anneau d'éléments (34) disposés en cercle.

16. Élément de liaison selon la revendication 15, **caractérisé en ce que** les éléments disposés en cercle (34) possèdent des arêtes (35) servant à perforer une surface (40).

17. Élément de liaison (30) selon l'une des revendications 15 ou 16, **caractérisé en ce que** l'élément de liaison (1, 20, 30, 52, 67, 75, 80) sert à recevoir un élément de fixation ou une charnière.

18. Assemblage réalisé selon le procédé de l'une des revendications 1 à 10 avec un ou plusieurs éléments de liaison selon l'une des revendications 11 à 17, **caractérisé en ce que** la matière fondue de l'élément de liaison (67) a durci dans la structure d'un matériau de base comprimé d'un objet (66).
